(19) Europäisches Patentamt
European Patent Office
Office européen des brevets

(11) **EP 4 395 356 A1**

(12) **EUROPEAN PATENT APPLICATION**

(43) Date of publication:
**03.07.2024 Bulletin 2024/27**

(21) Application number: **23216672.8**

(22) Date of filing: **14.12.2023**

(51) International Patent Classification (IPC):
**H04N 23/698** (2023.01)    **B60R 1/12** (2006.01)
**B60R 1/24** (2022.01)    **B60R 1/25** (2022.01)

(52) Cooperative Patent Classification (CPC):
**H04N 23/698; B60R 1/23;** B60R 2300/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 JP 2022211269**

(71) Applicant: **CANON KABUSHIKI KAISHA**
**Tokyo 146-8501 (JP)**

(72) Inventors:
• **HORIKAWA, Kouji**
  **Tokyo,, 146-8501 (JP)**
• **YOKOYAMA, Junya**
  **Tokyo,, 146-8501 (JP)**
• **KAWATA, Jun**
  **Tokyo,, 146-8501 (JP)**

(74) Representative: **TBK**
**Bavariaring 4-6**
**80336 München (DE)**

(54) **IMAGE CAPTURING DEVICE, MOVABLE APPARATUS, AND STORAGE MEDIUM**

(57)     In order to allow image capturing of the side in front of a movable apparatus in a lateral direction, an image capturing device has an image capturing unit including an optical system forming a low-resolution region on a central side on a light reception surface of the image capturing unit and forming a high-resolution region on a peripheral side on the light reception surface of the image capturing unit, wherein the image capturing unit is disposed on the front side of the movable apparatus such that an image of at least the side in front of the movable apparatus in the lateral direction is formed on the light reception surface of the image capturing unit by the optical system.

FIG. 18

EP 4 395 356 A1

**Description**

BACKGROUND OF THE INVENTION

Field of the Invention

The present invention relates to an image capturing device capturing images of areas around a movable apparatus, a movable apparatus, a storage medium, and the like.

Description of the Related Art

In the related art, vehicles such as automobiles are provided with door mirrors (side mirrors) for checking rear sides on the left and the right. Meanwhile, in recent years, in order to improve visibility at the time of bad weather and reduce blind spots, in place of door mirrors constituted of mirrors in the related art, a technology of electronic mirrors in which images of areas around a vehicle are captured by image capturing devices and are displayed in a monitor has become known.

However, viewing angles of mirrors in the related art create blind spots around a vehicle in a confined space parking lot or the like at the time of a right turn or at the time of passing through a narrow road (passing by an oncoming vehicle), and this makes it difficult to confirm safety. In contrast, in Japanese Patent Laid-Open No. 2016-168877, a proposal for eliminating blind spots by providing image capturing devices for capturing images of the rear side at positions of left and right door mirrors of a vehicle and image capturing devices for capturing images of areas around the vehicle has been proposed.

However, in the constitution of Japanese Patent Laid-Open No. 2016-168877, since it is necessary to respectively prepare image capturing devices for capturing images of areas around a vehicle and parts around wheels on left and right side surfaces, there is a problem of installation costs. In addition, it is necessary to perform positioning processing of correcting positional deviation between video images of the image capturing devices on the left and right side surfaces respectively capturing images of areas around the vehicle and parts around the wheels, and there is a problem that the processing costs thereof are high.

SUMMARY OF THE INVENTION

An image capturing device has an image capturing unit including an optical system forming a low-resolution region on a central side on a light reception surface of the image capturing unit and forming a high-resolution region on a peripheral side on the light reception surface of the image capturing unit, wherein the image capturing unit is disposed on a front side of a movable apparatus such that an image of at least the side in front of the movable apparatus in a lateral direction is formed on the light reception surface of the image capturing unit by the optical system.

Further features of the present invention will become apparent from the following description of embodiments with reference to the attached drawings.

BRIEF DESCRIPTION OF THE DRAWINGS

Fig. 1 is an explanatory view of an image capturing device 10 according to First Embodiment.
Figs. 2A and 2B are explanatory views for optical characteristics of an optical system 11 according to First Embodiment.
Fig. 3 is an explanatory view of a vehicle and image capturing ranges of the image capturing devices according to First Embodiment.
Fig. 4A is a view of the vehicle shown in Fig. 3 viewed from the front, and Fig. 4B is a view of the vehicle shown in Fig. 3 viewed from behind.
Fig. 5 is a view expressing an example of a video image captured by the image capturing device 10 disposed on the right side surface according to First Embodiment.
Fig. 6 is a functional block diagram showing a constitution example of a processing unit 13 according to First Embodiment.
Fig. 7 is an explanatory flowchart of a processing flow in an image capturing method performed by the image capturing device according to First Embodiment.
Fig. 8 is an explanatory view of the vehicle and the image capturing ranges of the image capturing devices according to Second Embodiment.

Fig. 9 is a view expressing an example of a video image captured by an image capturing element 12 according to Second Embodiment.

Fig. 10 is a functional block diagram showing a constitution example of the processing unit 13 according to Second Embodiment.

Fig. 11 is an explanatory flowchart of a processing flow in the image capturing method performed by the image capturing device according to Second Embodiment.

Fig. 12 is an explanatory view of the vehicle and the image capturing ranges of the image capturing devices according to Third Embodiment.

Fig. 13 is a view expressing an example of a video image captured by the image capturing element 12 according to Third Embodiment.

Fig. 14 is a functional block diagram showing a constitution example of the processing unit 13 according to Third Embodiment.

Fig. 15 is an explanatory flowchart of a processing flow in the image capturing method performed by the image capturing device according to Third Embodiment.

Fig. 16 is an explanatory flowchart of alternative processing of Step S23 in Fig. 11 in the image capturing device according to Fourth Embodiment.

Fig. 17 is an explanatory view related to processing of replacing a video image having a part of a stain or a defect with a video image from the other image capturing device.

Fig. 18 is a view showing a disposition example of the image capturing device according to Fifth Embodiment.

Fig. 19 is a functional block diagram showing a constitution example of the processing unit 13 of the image capturing device according to Fifth Embodiment.

Fig. 20 is an explanatory view for a processing flow in the image capturing method performed by the image capturing device according to Fifth Embodiment.

Fig. 21 is a view showing an example of a video image of the side in front according to Fifth Embodiment.

Fig. 22 is a view showing an example of a video image in a vertical direction displayed in Step S206.

Fig. 23 is a view showing an example of a video image in a lateral direction displayed in Step S206.


DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.


(First Embodiment)

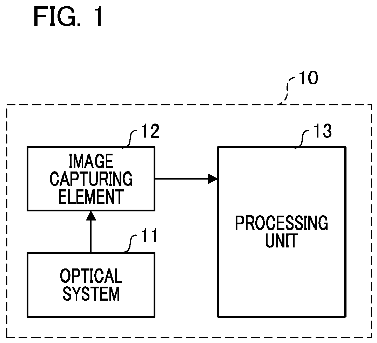

Fig. 1 is an explanatory view related to an image capturing device according to First Embodiment of the present invention. Image capturing devices 10 in Fig. 1 are installed on side surfaces of a vehicle 100 so as to monitor areas around the vehicle 100 and capture images of subjects around the vehicle 100. The image capturing devices 10 each have an optical system 11, an image capturing element 12, and a processing unit 13.

The optical system 11 has at least one lens and performs image formation from light incident from a subject on a light reception surface (not shown) of the image capturing element 12 serving as an image capturing unit. The image capturing element 12 converts an optical image of a subj ect formed by the optical system 11 into an electrical signal and transmits it to the processing unit 13. Details of optical characteristics of the optical system 11 will be described below.

For example, the processing unit 13 is a system-on-chip (SOC)/field programable gate array (FPGA) or the like and has a CPU serving as a computer and a memory serving as a storage medium. The CPU performs various kinds of control of the system in its entirety by executing a computer program stored in the memory.

In addition, the processing unit 13 develops a video signal acquired from the image capturing devices 10 and performs various kinds of image processing such as wide dynamic range (WDR) correction, gamma correction, LUT processing, distortion correction, and cutting-out. The processing unit 13 may be provided inside an information processing device at a place away from the vehicle 100.

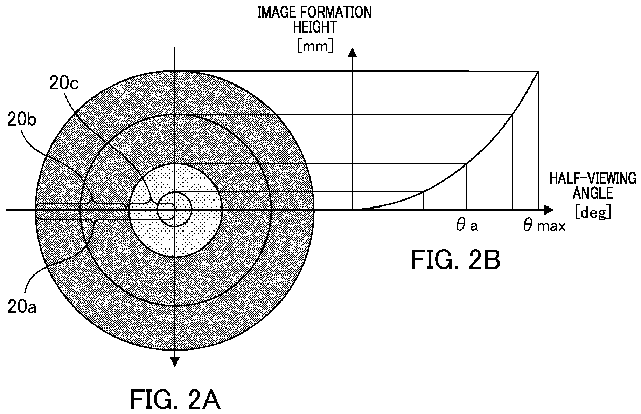

Next, optical characteristics of the optical system 11 in the image capturing device 10 will be described in detail. Figs. 2A and 2B are explanatory views for optical characteristics of the optical system 11 according to First Embodiment. Fig. 2A is a view showing image heights y in a contour line shape at respective half-viewing angles on the light reception surface of the image capturing element in the optical system 11.

In addition, Fig. 2B is a view expressing projective characteristics indicating relationships between the image heights y (image formation heights) and half-viewing angles $\theta$ in the optical system 11. In Fig. 2B, the horizontal axis indicates the half-viewing angle (an angle formed by the optical axis and an incident ray) $\theta$, and the vertical axis indicates the image formation height (image height) y on the light reception surface (on an image plane) of the image capturing device 10.

As shown in the projective characteristics of Fig. 2B, regarding optical characteristics, the optical system 11 is configured to have a projective characteristic $y(\theta)$ varying between a region at a smaller half-viewing angle $\theta$ (in the vicinity of the optical axis) and a region at a larger half-viewing angle $\theta$ (a region away from the optical axis). That is, when the amount of increase in image height y with respect to the half-viewing angle $\theta$ per unit (that is, the number of pixels per unit angle) is regarded as a resolution, the resolution differs depending on the region.

It can also be said that this local resolution is expressed by a differential value $dy(\theta)/d\theta$ of the projective characteristic $y(\theta)$ at the half-viewing angle $\theta$. That is, it can be said that the larger the inclination of the projective characteristic $y(\theta)$ in Fig. 2B, the higher the resolution. In addition, it can also be said that the larger the interval of the image heights y in the contour line shape at the respective half-viewing angles in Fig. 2A, the higher the resolution.

In First Embodiment, when the half-viewing angle $\theta$ is smaller than a predetermined half-viewing angle $\theta a$, a region in the vicinity of the center formed on the light reception surface of the sensor (the half-viewing angle $\theta$ is smaller than the predetermined half-viewing angle $\theta a$) will be referred to as a low-resolution region 20c, and an outer region having the half-viewing angle $\theta$ equal to or larger than the predetermined half-viewing angle $\theta a$ will be referred to as a high-resolution region 20b.

In addition, the reference number 20a denotes the entire image capturing range (entire viewing angle). The low-resolution region 20c is a high-distortion region, and the high-resolution region 20b is a low-distortion region. In Example, the low-resolution region 20c and the high-resolution region 20b of the optical system 11 are configured to be in a concentric circle state but they may not be in a concentric circle state. For example, each of the regions may have a distorted shape.

In addition, the center of gravity of the low-resolution region 20c and the center of gravity of the high-resolution region 20b may not coincide with each other. Moreover, it may also deviate from the center of the light reception surface. In the optical system of First Embodiment, the low-resolution region 20c need only be formed on a central side on the light reception surface of the image capturing unit, and the high-resolution region 20b need only be formed on a peripheral side on the light reception surface.

When a focal distance is f, a half-viewing angle is $\theta$, an image height in an image plane is y, a projective characteristic indicating a relationship between the image height y and the half-viewing angle $\theta$ is $y(\theta)$, and $\theta$max is a maximum half-viewing angle of the optical system, the optical system 11 of First Embodiment is configured to satisfy the following Mathematical Expression 1.

$$0.2 < 2 \times f \times \tan(\theta max/2)/y(\theta max) < 0.92 \ldots \text{(Mathematical Expression 1)}$$

In the optical system having such optical characteristics, the magnification in a radiation direction with respect to the optical axis can be adjusted by adjusting the projective characteristic $y(\theta)$. Accordingly, the aspect ratio in the radiation direction and the circumferential direction with respect to the optical axis can be controlled. Therefore, unlike fisheye lenses in the related art, it is possible to obtain high-resolution images with little distortion in peripheral regions while having a wide viewing angle.

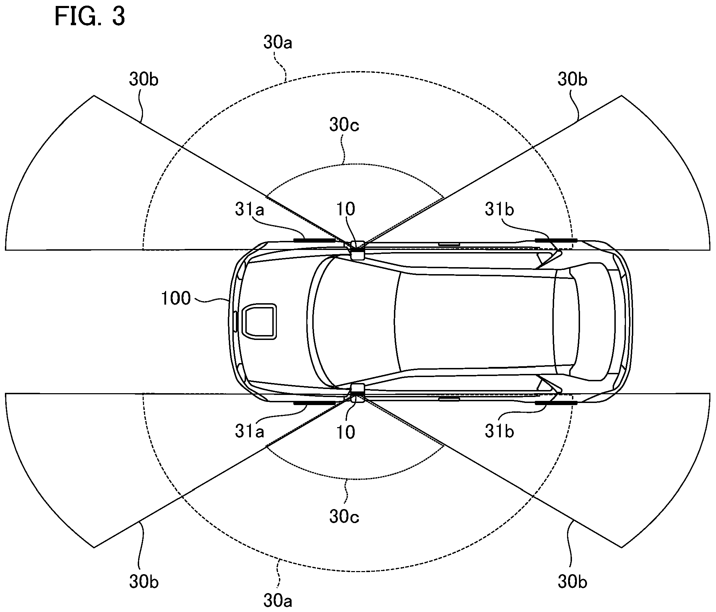

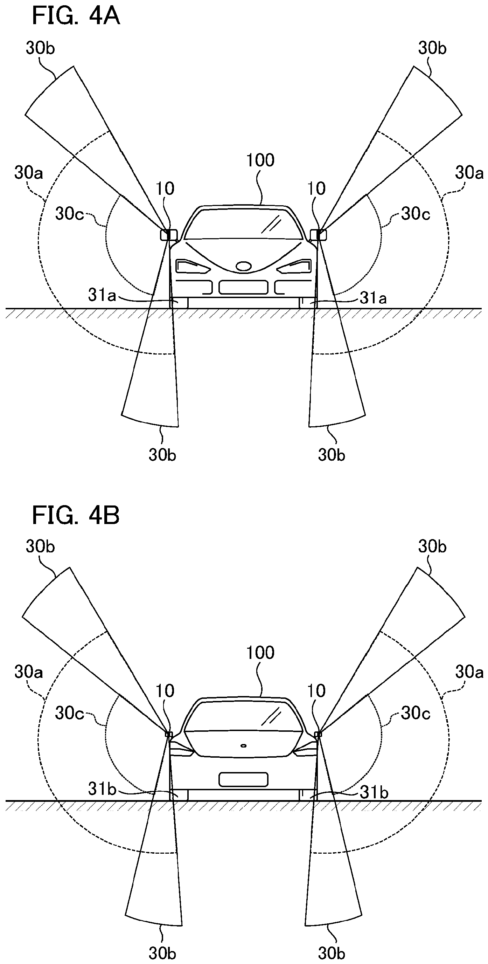

Fig. 3 is an explanatory view of a vehicle (for example, automobiles) and the image capturing ranges of the image capturing devices according to First Embodiment. In addition, Fig. 4A is a view of the vehicle 100 shown in Fig. 3 viewed from the front, and Fig. 4B is a view of the vehicle 100 shown in Fig. 3 viewed from behind. The diagrams schematically show vertical viewing angles of the image capturing devices 10.

In Fig. 3, the vehicle 100 is viewed from above in a bird's-eye view, and the image capturing devices 10 are installed on the right lateral side and the left lateral side of the vehicle (movable apparatus).

In Figs. 3, 4A, and 4B, entire image capturing ranges 30a schematically indicate the horizontal viewing angles of the image capturing devices 10, and the entire image capturing ranges 30a are disposed such that they include blind spot parts obliquely in front of a driver in the image capturing ranges. At this time, images of the blind spot parts may be captured by any of high-resolution image capturing ranges 30b and low-resolution image capturing ranges 30c.

The high-resolution image capturing ranges 30b are ranges for image capturing in the high-resolution region 20b of the image capturing devices 10, and the low-resolution image capturing ranges 30c are ranges for image capturing in the low-resolution region 20c of the image capturing devices 10. In addition, the entire image capturing ranges 30a correspond to the entire image capturing range (entire viewing angle) 20a of the image capturing devices 10.

In addition, as shown in Figs. 3, 4A, and 4B, the viewing angles are set around the vehicle such that the sides obliquely in front of and obliquely behind the vehicle 100 and the sides obliquely above and obliquely below the vehicle are included in the high-resolution image capturing ranges 30b of the image capturing devices 10. The image capturing devices 10 are disposed such that the high-resolution image capturing ranges 30b include the front wheels 31a and rear wheels 31b of the vehicle and parts around tires including road surfaces. That is, the optical system 11 is disposed such that images of the front wheels, the rear wheels, and the road surfaces are formed in the high-resolution region.

That is, in First Embodiment, an image capturing unit including an optical system is disposed in a movable apparatus such that images of lower lateral sides of the movable apparatus and areas in the forward-rearward direction are formed in the high-resolution region on the light reception surface of the image capturing unit by the optical system.

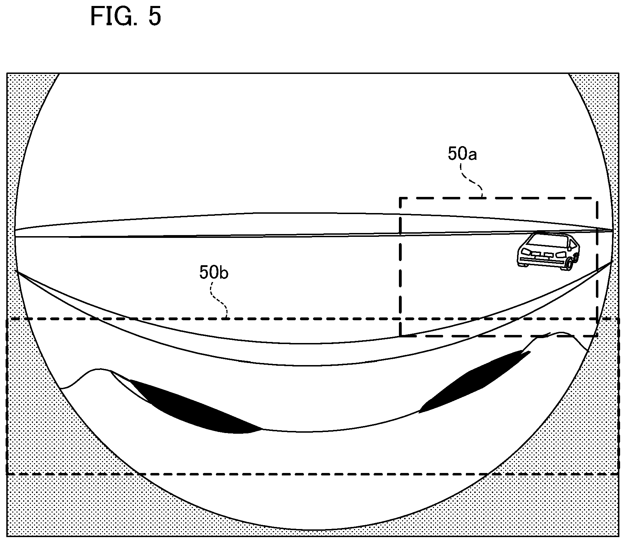

Fig. 5 is a view expressing an example of a video image captured by the image capturing device 10 disposed on the right side surface according to First Embodiment. The processing unit 13 generates video images to be output to electronic side mirrors as the rear lateral side parts and video images to be output to electronic side mirrors or some display device as parts around the tires respectively by processing these video images.

The reference number 50a denotes a video image region cut out for display in the electronic side mirrors as a rear lateral side cutout region, in which the rear lateral side of a host vehicle is projected. The reference number 50b denotes a video image region cut out for display of the part around the tires as a tire surrounding part cutout region, in which the part around the tires on a lateral side of the host vehicle is projected. Details of each of the regions will be described below.

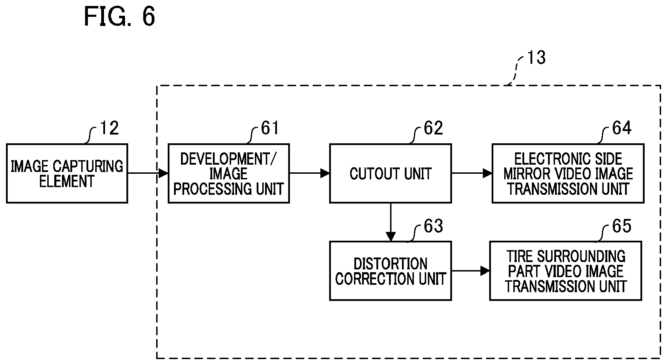

Fig. 6 is a functional block diagram showing a constitution example of the processing unit 13 according to First Embodiment. Some of the functional blocks shown in Fig. 6 are realized by causing the CPU serving as a computer (not shown) included in the processing unit 13 to execute the computer program stored in the memory serving as a storage medium (not shown).

However, some or all of them may be realized by hardware. A dedicated circuit (ASIC), a processor (a reconfigurable processor, DSP), or the like can be used as hardware.

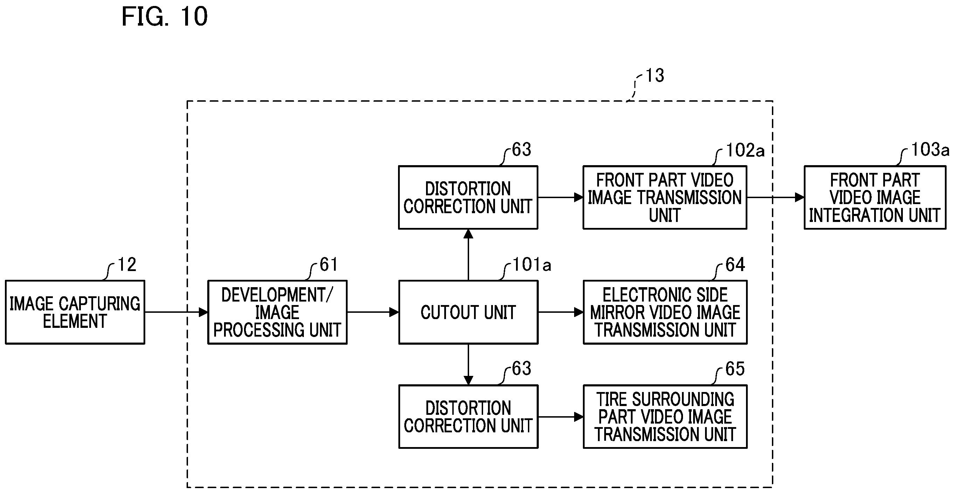

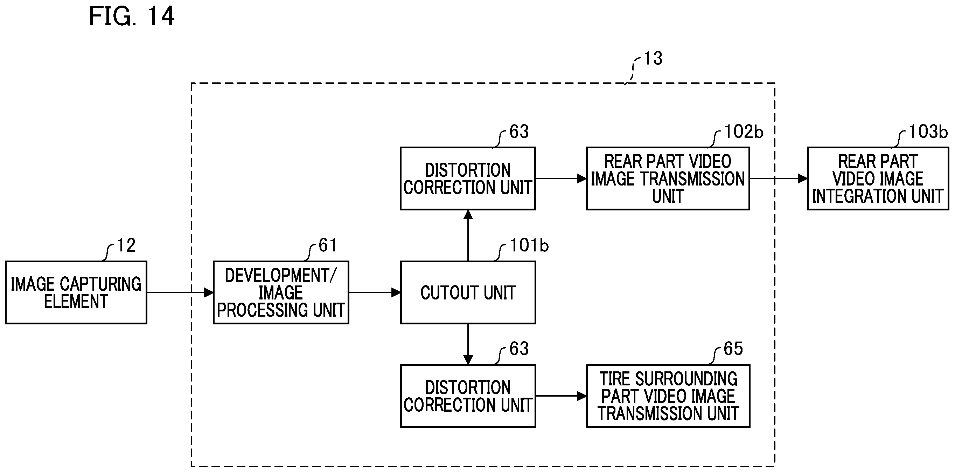

In addition, the functional blocks shown in Fig. 6 may not be built into the same casing and may be respectively constituted by separate devices connected to each other through signal paths. The foregoing description related to Fig. 6 similarly applies to Figs. 10 and 14 as well.

In Fig. 6, when the processing unit 13 receives a video signal from the image capturing element 12, first, a development/image processing unit 61 performs various kinds of correction processing such as development processing, WDR correction, and gamma correction. A cutout unit 62 cuts out each of the rear lateral side cutout region 50a and the tire surrounding part cutout region 50b from the processed video image.

Since the rear lateral side cutout region 50a has little distortion due to optical characteristics of the optical system 11, it is possible to obtain display with no sense of incompatibility even if it is output to the electronic side mirrors without performing distortion correction processing. It is preferable that a cutout region be cut out from the high-resolution region 20b, but it is not limited thereto, and the low-resolution region 20c at an angle smaller than a predetermined viewing angle may be partially included.

It is more preferable that the center of the rear lateral side cutout region 50a be cut out such that it is included in the high-resolution region 20b. In addition, since the rear lateral side cutout region 50a is an image-capturing region displayed in the electronic side mirrors, it is preferably cut out from a region projecting the rear side with respect to a traveling direction. That is, for example, in the case of the image capturing device 10 installed on the right lateral side, in the view of Fig. 5, it is preferably cut out such that that the center of the rear lateral side cutout region 50a is on the right side of the center of the image-capturing region.

Since the electronic side mirrors are monitors imitating mirrors, processing of performing horizontal inversion is included in either the processing unit 13 or the electronic side mirrors. In addition, although a video signal of the rear lateral side cutout region 50a is transmitted to the electronic side mirrors via an electronic side mirror video image transmission unit 64, a correction unit (not shown) performing distortion correction or the like may be provided between the cutout unit 62 and the electronic side mirror video image transmission unit 64.

Regarding the tire surrounding part cutout region 50b in Fig. 5, the range (region) cut out by the cutout unit 62 may be cut out such that it includes areas around the front and rear tires of the host vehicle. In addition, each of the regions cut out by the cutout unit 62 may be suitably set in accordance with the region in the real space corresponding to the displayed video image. Namely, the displayed range and the region in the real space may be set by a user.

In addition, the cutout tire surrounding part cutout region 50b receives distortion correction processing by a distortion correction unit 63. Here, the distortion correction unit 63 corrects a distortion in an image obtained from at least the low-resolution region. The distortion correction unit 63 performs coordinate conversion for displaying an image as in Fig. 5 in a rectangular screen of a display unit.

Since the image of the rear lateral side cutout region 50a in Fig. 5 has little distortion, it can be displayed as it is without performing distortion correction. However, since a portion thereof is distorted, partial distortion correction may be performed.

Thereafter, a video signal is displayed, for example, in a side view monitor display device or the like via a tire surrounding part video image transmission unit 65. Alternatively, it may be displayed such that it is partially superimposed in a picture-in-picture manner, for example, on the lower side of the screen for the electronic side mirror displaying a video image of the rear lateral side. These display devices function as display units for cutting out and displaying at least one of the images of the lower lateral sides of the movable apparatus and the areas in the forward-rearward direction.

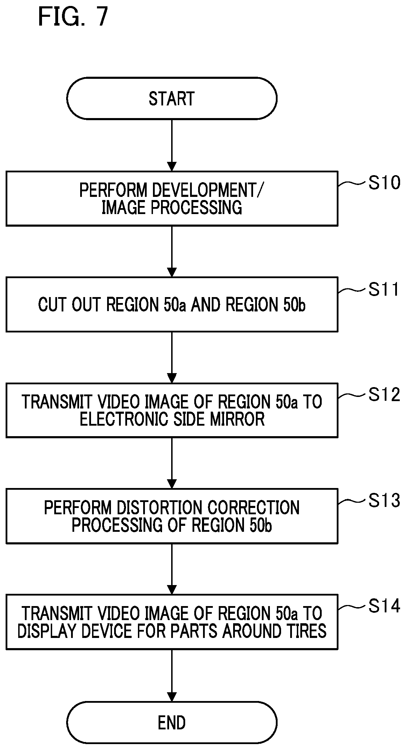

Fig. 7 is an explanatory flowchart of a processing flow in an image capturing method performed by the image capturing device according to First Embodiment. Operation of each step in the flowchart of Fig. 7 is performed by causing the CPU or the like serving as a computer inside the processing unit 13 to execute the computer program stored in the memory.

In Step S10, the processing unit 13 performs image processing such as development processing or various kinds of correction with respect to a video signal received from the image capturing element 12. Next, in Step S11, the processing unit 13 performs processing of cutting out regions corresponding to the rear lateral side cutout region 50a and the tire surrounding part cutout region 50b described above.

Next, in Step S12, the electronic side mirror video image transmission unit 64 transmits a cutout video image of the rear lateral side cutout region 50a to the electronic side mirror. Next, in Step S13, a cutout video image of the tire surrounding part cutout region 50b is subjected to distortion correction processing.

Thereafter, in Step S14, the tire surrounding part video image transmission unit 65 transmits a video image of the tire surrounding part cutout region 50b after distortion correction processing to the display device for displaying parts around the tires.

In this manner, due to the image capturing devices 10 installed toward the lateral side, it is possible to perform high-resolution image capturing of video images of areas around the vehicle and parts around the tires with fewer image capturing devices. Moreover, through image capturing in the high-resolution region 20b at an angle equal to or larger than a predetermined viewing angle, it is possible to obtain video images of the rear lateral sides and parts around the tires having a high resolution and little distortion. In First Embodiment, tires have been described as an example of wheels, but they are not limited to tires.

(Second Embodiment)

In First Embodiment, disposition and processing in which the image capturing devices 10 are disposed on the left and right side surfaces of the vehicle and areas around the lateral sides and parts around the tires of the vehicle can be monitored have been described.

In Second Embodiment, disposition and processing of image capturing devices capable of monitoring the side in front and the rear lateral sides of the vehicle and parts around the tires will be described. Description of the points which are the same as those of First Embodiment will be omitted or simplified.

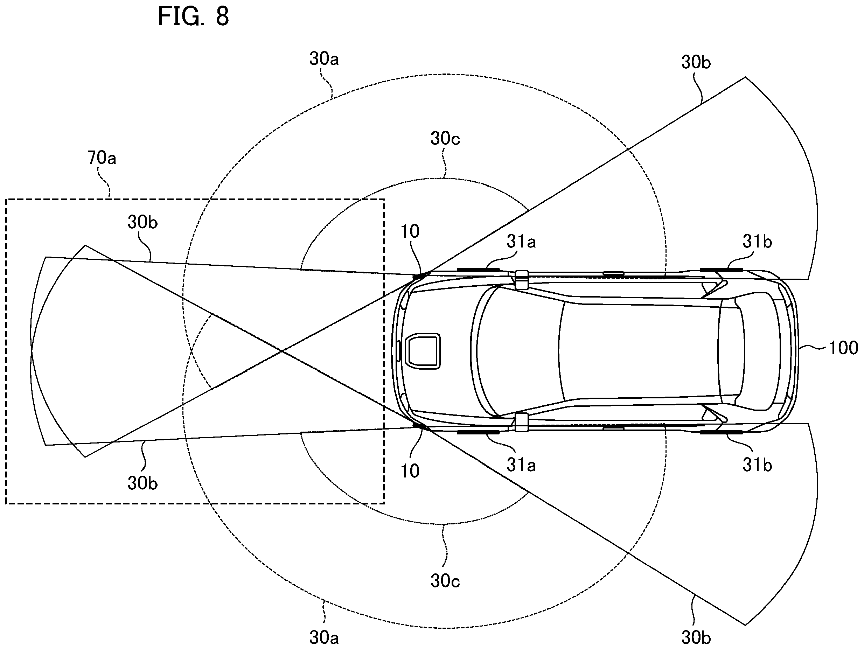

Hereinafter, with reference to Fig. 8, Second Embodiment of the present invention will be described. Fig. 8 is an explanatory view of the vehicle and the image capturing ranges of the image capturing devices according to Second Embodiment, in which the vehicle 100 is viewed from above in a bird's-eye view.

As shown in Fig. 8, the image capturing devices 10 are installed on the front right side surface (around a front right end part) and the front left side surface (around a front left end part) of the vehicle 100. That is, in Second Embodiment, the image capturing devices 10 are respectively disposed on different sides on the front side of the movable apparatus in a traverse width direction, and this is disposition capable of monitoring the side in front, the rear lateral sides, and parts around the tires of the vehicle 100 (movable apparatus).

The entire image capturing ranges 30a in Fig. 8 schematically indicate the horizontal viewing angles of the image capturing devices 10 and are ranges wider than the entire image capturing ranges 30a in First Embodiment. In addition, in the part in front of the vehicle 100, the high-resolution image capturing ranges 30b overlap each other by the image capturing devices 10 on the left and the right, and the overlapping range is indicated as a front side overlapping range 70a.

That is, the image capturing unit is disposed on the front side of the movable apparatus such that an image of at least the side in front of the movable apparatus in the lateral direction is formed on the light reception surface of the image capturing unit by the optical system.

In addition, in Second Embodiment, an image of the high-resolution image capturing range 30b corresponding to the high-resolution region of the optical system in the forward-rearward direction of the movable apparatus includes an image of the side in front of the movable apparatus, and at least portions of the image capturing ranges of the high-resolution regions of the plurality of image capturing devices are disposed in a manner of overlapping each other. In addition, the high-resolution regions include blind spots of a driver obliquely in front of the movable apparatus.

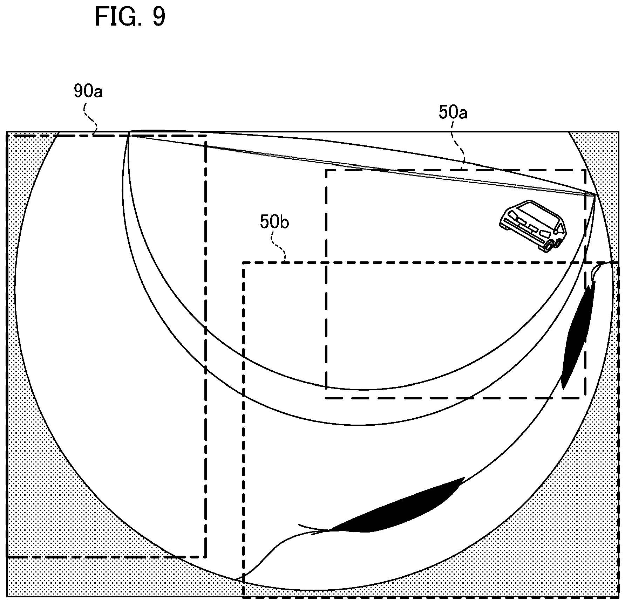

Fig. 9 is a view expressing an example of a video image captured by the image capturing element 12 according to Second Embodiment, which shows an example of a video image captured by the image capturing element 12 when the image capturing device 10 is disposed as in Fig. 8. Fig. 9 shows an example of a video image from the image capturing device 10 disposed on the front right side surface. The image capturing device 10 is also disposed around the end part on the front left side surface, and description thereof will be omitted.

In Second Embodiment, the processing unit 13 generates a video image as a video image for displaying the rear lateral side cutout region 50a on the rear right lateral side in the electronic side mirror by processing a video image as in Fig. 9. In addition, the tire surrounding part cutout region 50b of the part around the tires is generated as a video image to be displayed in a portion of the electronic side mirror or other display devices.

Moreover, in Second Embodiment, a video image for displaying the side in front of the vehicle 100 in some display device is generated. A front side cutout region 90a is a region cut out for a video image displaying the side in front of the vehicle, and details thereof will be described below.

Fig. 10 is a functional block diagram showing a constitution example of the processing unit 13 according to Second Embodiment. In Fig. 10, when the processing unit 13 receives a video signal from the image capturing element 12, first, the development/image processing unit 61 performs various kinds of correction processing such as development processing, WDR correction, and gamma correction. A cutout unit 101a cuts out the rear lateral side cutout region 50a, the tire surrounding part cutout region 50b, and the front side cutout region 90a from the processed video image.

A video signal of the rear lateral side cutout region 50a is transmitted to the electronic side mirror (not shown) via the electronic side mirror video image transmission unit 64. A correction unit (not shown) performing distortion correction or the like may be provided between the cutout unit 101a and the electronic side mirror video image transmission unit 64. That is, if a portion of a video signal of the rear lateral side cutout region 50a is distorted, distortion correction may be performed with respect to this part.

The tire surrounding part cutout region 50b receives distortion correction processing by the distortion correction unit 63. Thereafter, a video signal is displayed, for example, in the side view monitor display device or the like via the tire surrounding part video image transmission unit 65. Alternatively, it may be displayed such that it is partially superimposed in a picture-in-picture manner, for example, on the lower side of the screen for the electronic side mirror displaying a video image of the rear lateral side.

The front side cutout region 90a is a region used for a video image displaying the side in front of the vehicle 100, and a range (region) cut out by the cutout unit 101a may be cut out such that the front part of the vehicle is included. Namely, a part corresponding to the side in front of the vehicle in the high-resolution image capturing ranges 30b and the low-resolution image capturing ranges 30c subjected to image capturing by the image capturing device 10 may be cut out.

At least, as shown in the front side overlapping range 70a, a part overlapping the image capturing devices 10 disposed around the front end parts on the left and right side surfaces of the vehicle 100 may be cut out. In addition, each of the regions cut out by the cutout unit 101a may be suitably set in accordance with the region in the real space corresponding to the video image displaying the side in front of the vehicle. Namely, the range displaying the side in front of the vehicle and the region in the real space may be set by a user.

In addition, a video image of the cutout front side cutout region 90a receives distortion correction processing by the distortion correction unit 63 and then is transmitted to a front part video image integration unit 103a via a front part video image transmission unit 102a.

The front part video image integration unit 103a performs processing of integrating two front part video images respectively generated by two image capturing devices 10 disposed around the side surface ends on the front side on the left and the right of the vehicle 100. Regarding integration processing, positioning processing for correcting positional deviation between video images is performed with respect to the video images of the two front side cutout regions 90a cut out from the two image capturing devices 10.

Further, an integrated front side video image is generated by composing two video images after positioning processing is performed. In this manner, the front part video image integration unit 103a functions as a composition unit which composes video images obtained by the image capturing devices which are respectively disposed on both sides on the front side of the movable apparatus in the traverse width direction.

An output of the front part video image integration unit 103a is supplied and displayed, for example, in the display device disposed in an instrument panel of the vehicle 100 or other information processing devices for displaying the integrated front side video image.

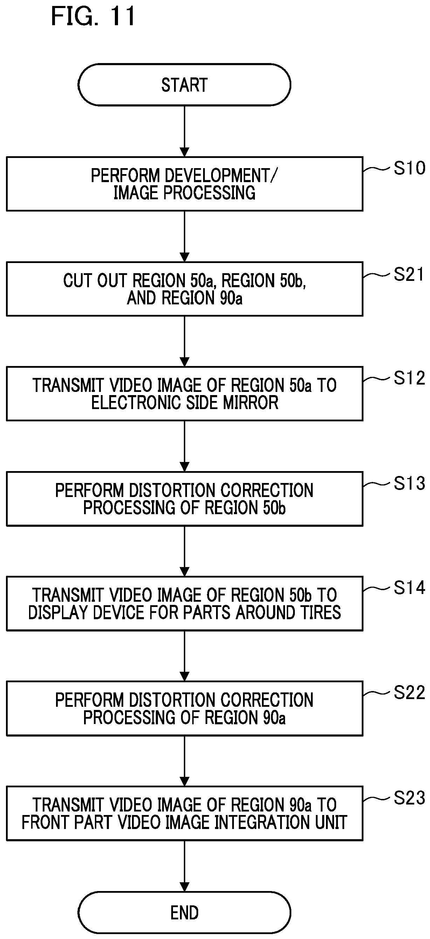

Fig. 11 is an explanatory flowchart of a processing flow in the image capturing method performed by the image capturing device according to Second Embodiment, which describes a processing flow when forward monitoring is performed in Second Embodiment. Operation of each step in the flowchart of Fig. 11 is performed by causing the CPU or the like serving as a computer inside the processing unit 13 to execute the computer program stored in the memory.

In Step S10, the processing unit 13 performs image processing such as development processing or various kinds of correction with respect to a video signal received from the image capturing element 12. Next, in Step S21, the processing unit 13 performs processing of cutting out regions corresponding to the rear lateral side cutout region 50a, the tire surrounding part cutout region 50b, and the front side cutout region 90a described above.

Next, in Step S12, the electronic side mirror video image transmission unit 64 transmits a cutout video image of the rear lateral side cutout region 50a to the electronic side mirror. Next, in Step S13, a cutout video image of the tire surrounding part cutout region 50b is subjected to distortion correction processing. Thereafter, in Step S14, the tire surrounding part video image transmission unit 65 transmits a video image of the tire surrounding part cutout region 50b after distortion correction processing to the display device for displaying parts around the tires.

Next, in Step S22, the cutout video image of the front side cutout region 90a is subjected to distortion correction processing. Further, in Step S23, the front part video image transmission unit 102a transmits the front part video image of the front side cutout region 90a subjected to distortion correction processing to the front part video image integration unit 103a, performs positioning processing, and then performs composition.

As described above, a composite front part video image is supplied and displayed, for example, in the display device disposed in the instrument panel of the vehicle 100 or other information processing devices for displaying the integrated front side video image.

As described above, due to the two image capturing devices 10 disposed around the end parts on the front side on the left and right side surfaces, it is possible to perform high-resolution image capturing of video images of particularly the rear lateral sides, the side in front of the vehicle, and parts around the tires of the areas around the vehicle with fewer image capturing devices. Furthermore, through image capturing in the high-resolution region 20b at an angle equal to or larger than a predetermined viewing angle, it is possible to obtain video images of the rear lateral sides and parts around the tires having a high resolution and little distortion.

(Third Embodiment)

In Third Embodiment, disposition and processing of image capturing devices suitable for monitoring of the rear side and parts around the tires will be described. Description of the points which are the same as those of First Embodiment and Second Embodiment will be omitted or simplified.

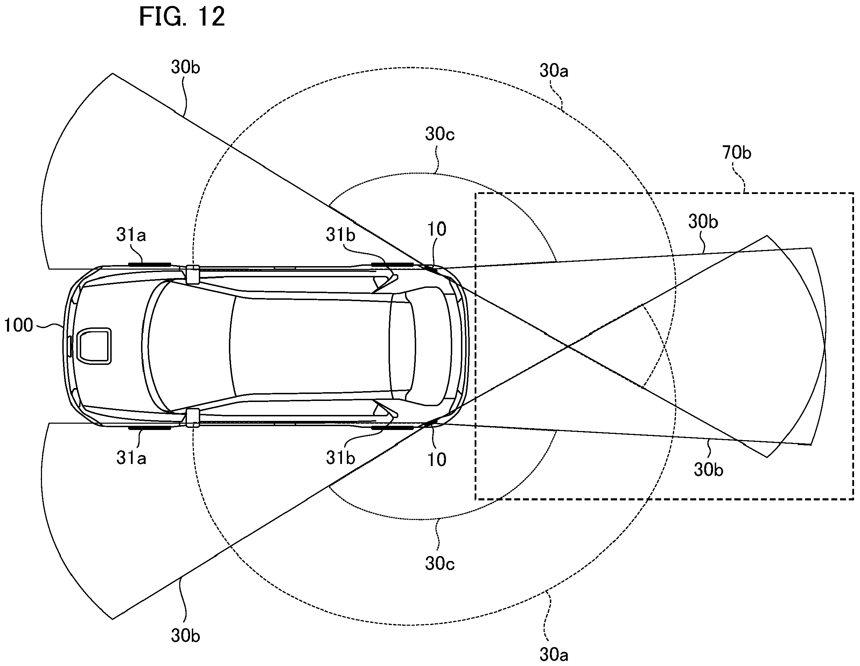

Hereinafter, with reference to Fig. 12, Third Embodiment of the present invention will be described. Fig. 12 is an explanatory view of the vehicle and the image capturing ranges of the image capturing devices according to Third Embodiment, which shows a state of the vehicle 100 viewed from above in a bird's-eye view.

Fig. 12 shows a disposition example suitable for monitoring the rear side and parts around the tires of the vehicle 100. In Third Embodiment, as shown in Fig. 12, the image capturing devices 10 are installed on the rear right side surface (around a rear right end part) and the rear left side surface (around a rear left end part) of the vehicle 100.

That is, in Third Embodiment, the image capturing devices 10 are respectively disposed on both sides on the rear side of the movable apparatus in the traverse width direction, and this is disposition capable of monitoring the side behind, the rear lateral sides, and parts around the tires of the vehicle 100 (movable apparatus).

The entire image capturing ranges 30a in Fig. 12 schematically indicate the horizontal viewing angles of the image capturing devices 10. In the part behind the vehicle, the high-resolution image capturing ranges 30b overlap each other by the image capturing devices 10 on the left and the right, and the overlapping range is indicated as a rear side overlapping range 70b.

In this manner, in Third Embodiment, an image of the high-resolution image capturing range 30b corresponding to the high-resolution region of the optical system in the forward-rearward direction of the movable apparatus includes an image on a side behind the movable apparatus, and the image capturing ranges of the high-resolution regions of the plurality of image capturing devices are disposed in a manner of overlapping each other.

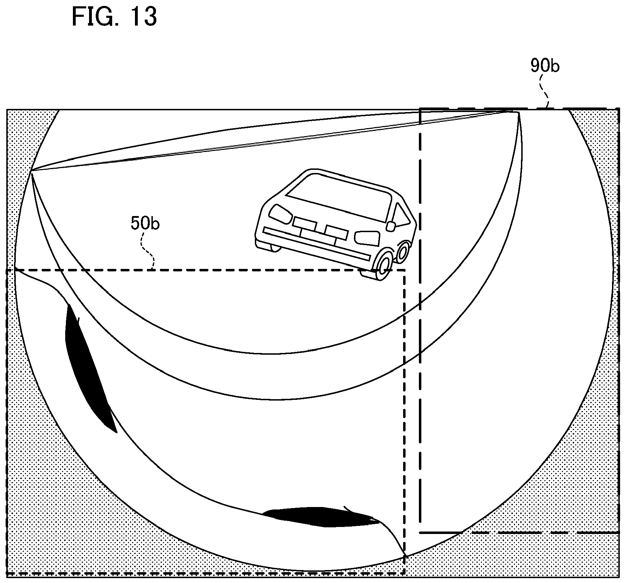

Fig. 13 is a view expressing an example of a video image captured by the image capturing element 12 according to Third Embodiment. Fig. 13 shows a video image from the image capturing device disposed at the rear end on the right side surface. The image capturing device 10 is also disposed around the end part on rear left side surface, and description thereof will be omitted.

In Third Embodiment, the processing unit 13 generates the tire surrounding part cutout region 50b of the parts around the tires as a video image to be displayed in a portion of the electronic side mirror or other display device by processing a video image as in Fig. 13.

Moreover, in Third Embodiment, a video image for displaying the side behind the vehicle 100 in some display device is generated. A rear side cutout region 90b is a region cut out for a video image displaying the side behind the vehicle, and details thereof will be described below.

Fig. 14 is a functional block diagram showing a constitution example of the processing unit 13 according to Third Embodiment, in Fig. 14, when the processing unit 13 receives a video signal from the image capturing element 12, first, the development/image processing unit 61 performs various kinds of correction processing such as development processing, WDR correction, and gamma correction.

A cutout unit 101b cuts out the tire surrounding part cutout region 50b and the rear side cutout region 90b from the processed video image. A video signal of the tire surrounding part cutout region 50b receives distortion correction processing by the distortion correction unit 63 and then is displayed, for example, in the side view monitor display device or the like via the tire surrounding part video image transmission unit 65. Alternatively, it may be displayed such that it is partially superimposed in a picture-in-picture manner, for example, on the lower side of the screen for the electronic side mirror displaying a video image of the rear lateral side.

The rear side cutout region 90b is a region used for a video image displaying the side behind the vehicle 100, and a range (region) cut out by the cutout unit 101b may be cut out such that the rear part of the vehicle is included. Namely, a part corresponding to the vehicle rear side in the high-resolution image capturing ranges 30b and the low-resolution image capturing ranges 30c subjected to image capturing by the image capturing device 10 may be cut out.

At least, as shown in the rear side overlapping range 70b, a part overlapping the image capturing devices 10 disposed around the rear end parts on the left and right side surfaces of the vehicle 100 may be cut out. In addition, the regions cut out by the cutout unit 101b may be suitably set in accordance with the region in the real space corresponding to the video image displaying the side behind the vehicle. Namely, the range displaying the side behind the vehicle and the region in the real space may be set by a user.

In addition, a video image of the cutout rear side cutout region 90b receives distortion correction processing by the distortion correction unit 63 and then is transmitted to a rear part video image integration unit 103b via a rear part video image transmission unit 102b.

The rear part video image integration unit 103b performs processing of integrating two rear part video images respectively generated by two image capturing devices 10 disposed around the side surface ends on the rear side on the left and the right of the vehicle 100. Regarding integration processing, positioning processing for correcting positional deviation between video images is performed with respect to the video images of the two rear side cutout regions 90b cut out from the two image capturing devices 10.

Further, an integrated rear side video image is generated by composing two video images after positioning processing is performed. In this manner, the rear part video image integration unit 103b functions as a composition unit which composes images of the rear side regions in which the image capturing ranges of the high-resolution regions overlap each other.

An output of the rear part video image integration unit 103b is supplied and displayed, for example, in the display device disposed in the instrument panel of the vehicle 100, a back mirror monitor, or other information processing devices for displaying the integrated rear side video image.

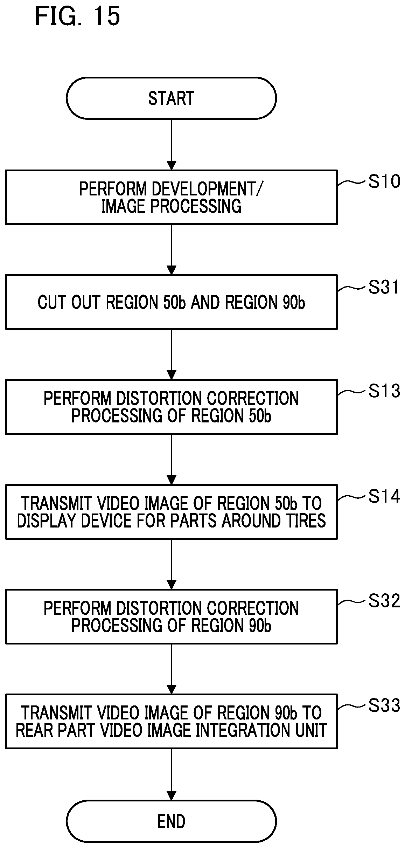

Fig. 15 is an explanatory flowchart of a processing flow in the image capturing method performed by the image capturing device according to Third Embodiment, which describes a processing flow when rearward monitoring is performed. Operation of each step in the flowchart of Fig. 15 is performed by causing the CPU or the like serving as a computer inside the processing unit 13 to execute the computer program stored in the memory.

In Step S10, the processing unit 13 performs image processing such as development processing or various kinds of correction with respect to a video signal received from the image capturing element 12. Next, in Step S31, the processing unit 13 performs processing of cutting out regions corresponding to the tire surrounding part cutout region 50b and the rear side cutout region 90b described above.

Next, in Step S13, a cutout video image of the tire surrounding part cutout region 50b is subjected to distortion correction processing. Thereafter, in Step S14, the tire surrounding part video image transmission unit 65 transmits a video image of the tire surrounding part cutout region 50b after distortion correction processing to the display device for displaying parts around the tires.

Next, in Step S32, the cutout video image of the rear side cutout region 90b is subjected to distortion correction processing. Further, in Step S33, the rear part video image transmission unit 102b transmits the rear part video image of the rear side cutout region 90b subjected to distortion correction processing to the rear part video image integration unit 103b, performs positioning processing, and then performs composition.

As described above, a composite rear part video image is supplied and displayed, for example, in the display device disposed in the instrument panel of the vehicle 100, the back mirror monitor, or other information processing devices for displaying the integrated rear side video image.

As described above, due to the two image capturing devices 10 disposed around the end parts on the rear side on the left and right side surfaces, it is possible to perform high-resolution image capturing of areas around the vehicle, particularly video images of the side behind the vehicle and parts around the tires with fewer image capturing devices. Furthermore, through image capturing in the high-resolution region 20b at an angle equal to or larger than a predetermined viewing angle, it is possible to obtain video images of the rear side and parts around the tires having a high resolution and little distortion.

(Fourth Embodiment)

In Step S23 of Second Embodiment, video images of the front side cutout regions 90a cut out from the video images of two image capturing devices were subjected to positioning.

However, in Fourth Embodiment, if there is a stain or a defect in an image of the side in front obtained from one image capturing device 10, correction (interpolation, replacement, or the like) is performed using an image of the other image capturing device 10 and then composition is performed.

That is, in Second Embodiment, a correction unit configured to correct a stain or a defect in one video image of video images obtained by the image capturing devices which are respectively disposed on both sides on the front side of the movable apparatus in the traverse width direction using the other video image is provided.

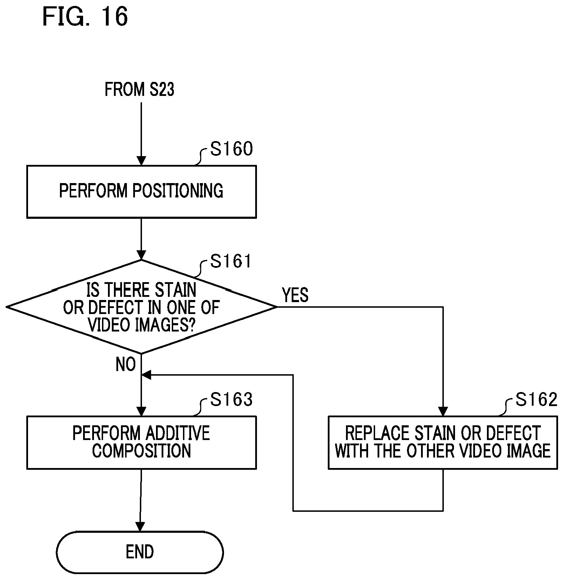

Functional blocks which are substantially the same as those in Fig. 10 may be used for the image capturing devices according to Fourth Embodiment. In addition, the processing flow of the image capturing devices according to Fourth Embodiment is substantially the same as that in Fig. 11. However, a processing flow as that in Fig. 16 instead of Step S23 in Fig. 11 is performed.

Fig. 16 is an explanatory flowchart of alternative processing of Step S23 in Fig. 11 in the image capturing device according to Fourth Embodiment. Operation of each step in the flowchart of Fig. 16 is performed by causing the CPU or the like serving as a computer inside the processing unit 13 to execute the computer program stored in the memory.

In Step S160, the front part video image integration unit 103a performs positioning processing for correcting positional deviation between video images with respect to the video images of the two front side cutout regions 90a cut out from the two image capturing devices 10 disposed around the side surface ends on the front side on the left and the right of the vehicle 100.

Next, in Step S161, it is judged whether there is a stain or a defect in one of video images of the two front side cutout regions 90a cut out from the two image capturing devices 10. In order to judge whether there is a stain or a defect, for example, if the same subject is projected at the same coordinates for a predetermined period in one video image, it can be judged that the subject is a part of a stain or a defect.

Alternatively, after a comparison between video images of the two front side cutout regions 90a cut out from the two image capturing devices 10, if there is a partial difference, a part of an image having less pixel change may be judged as a part of a stain or a defect. In the case of Yes in Step S161, the processing proceeds to Step S162, and correction is performed by replacing the video image having a part of a stain or a defect with the video image from the other image capturing device. Thereafter, the processing proceeds to Step S163.

Here, Step S162 functions as a correction step (correction unit) configured to correct a stain or a defect in one video image of video images obtained by the image capturing devices which are respectively disposed on both sides on the front side of the movable apparatus in the traverse width direction using the other video image.

In the case of No in Step S161, the processing proceeds to Step S163, and video images of the two front side cutout regions 90a cut out from the two image capturing devices 10 are subjected to additive composition. In Fourth Embodiment, video images of the two front side cutout regions 90a cut out from the two image capturing devices 10 after being partially replaced in Step S 162 are subjected to additive composition.

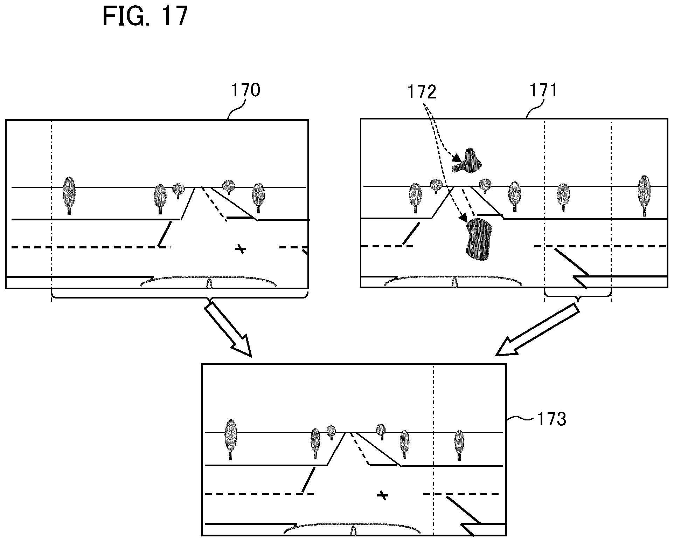

Effects achieved by performing such processing will be described using Fig. 17. Fig. 17 is an explanatory view related to processing of replacing a video image having a part of a stain or a defect with a video image from the other image capturing device.

In Fig. 17, the reference sign 170 shows an example of a distortion-corrected video image of a video image of the side in front cut out from the image capturing device 10, for example, disposed around the front end part on the left side of the vehicle 100. In addition, the reference sign 171 shows a distortion-corrected video image of a video image of the side in front cut out from the image capturing device 10 disposed around the front end part on the right side of the vehicle 100.

In Fig. 17, in a video image from the image capturing device 10 on the right side, for example, a stain 172 of the lens is projected. If such a stain or a defect is always projected at the same place in video images, it can be detected as a stain or a defect.

In Fourth Embodiment, if a stain or a defect such as 172 in Fig. 17 is detected in a video image from one image capturing device, the video image of the part is replaced (interpolated) with a video image from the other image capturing device 10. Accordingly, it is possible to display a video image after a portion thereof is replaced as indicated by the reference sign 173 in Fig. 17.

In this manner, in Fourth Embodiment, even if there is a stain, a defect, or the like in one image capturing device, a user can monitor the video image 173 with no sense of incompatibility. In the foregoing description, 172 has been described as a stain. However, for example, it may be raindrops or the like.

(Fifth Embodiment)

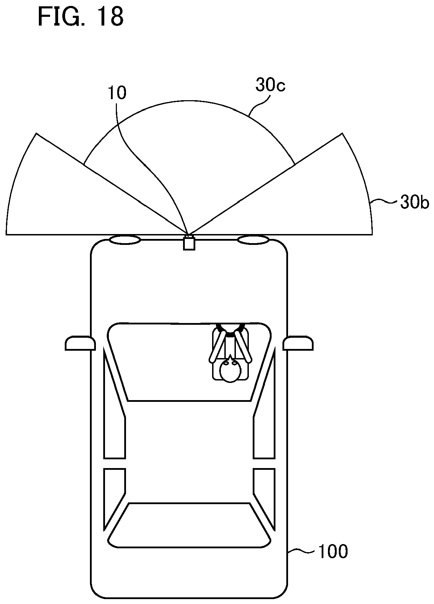

Next, Fifth Embodiment of the present invention will be described. Fig. 18 is a view showing a disposition example of the image capturing device according to Fifth Embodiment. In Fifth Embodiment, as shown in Fig. 18, the image capturing device 10 is disposed around the center at the front end of the vehicle 100 and is disposed such that images of the area in front of the vehicle 100 in the forward direction are captured.

In Fifth Embodiment, the image capturing device is disposed around the center at the front end of the movable apparatus, but it need only be disposed in the middle on the front side of the movable apparatus in the traverse width direction.

The optical system of the image capturing device 10 has characteristics as shown in Fig. 2. That is, the surrounding parts of the viewing angle are the high-resolution image capturing ranges 30b, and a part around the center of the viewing angle is the low-resolution image capturing range 30c.

Therefore, the optical system and the image capturing unit are disposed on the front side of the movable apparatus such that an image of at least the side in front of the movable apparatus in the lateral direction is formed in the high-resolution region on the light reception surface of the image capturing unit by the optical system, and the high-resolution region is disposed such that blind spots of a driver on the side in front of the movable apparatus in the lateral direction are included.

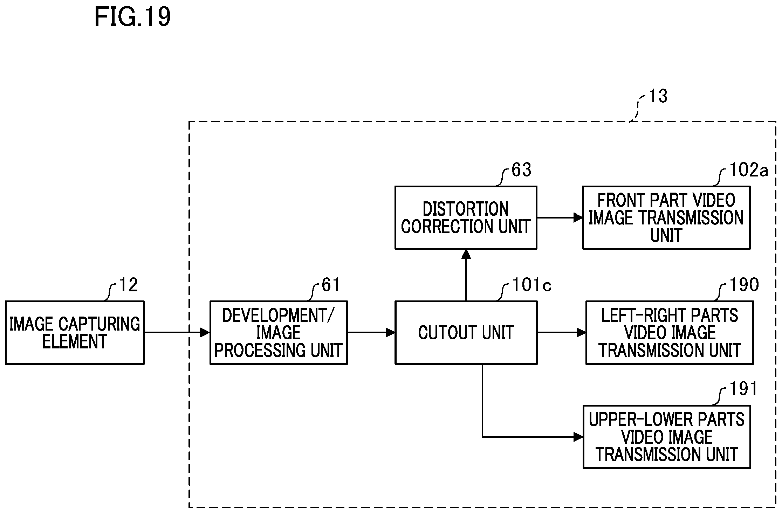

Fig. 19 is a functional block diagram showing a constitution example of the processing unit 13 of the image capturing device according to Fifth Embodiment. In Fig. 19, a cutout unit 101c captures video images of the front part (a part in front) corresponding to the low-resolution image capturing range 30c, causes the distortion correction unit 63 to perform distortion correction, and supplies them to the front part video image transmission unit 102a.

Meanwhile, the cutout unit 101c cuts out video images of the left and right parts corresponding to the high-resolution image capturing ranges 30b and supplies them to a left-right parts video image transmission unit 190. Both a video image of the left part and a video image of the right part may be supplied to the left-right parts video image transmission unit 190, or a video signal of only one of the left part and the right part may be supplied to the left-right parts video image transmission unit 190.

In addition, video images supplied to the left-right parts video image transmission unit 190 are displayed in a display unit such as a liquid crystal display provided in the instrument panel, for example. That is, at least one of images in the lateral direction of the movable apparatus is cut out and displayed in the display unit.

In addition, the cutout unit 101c cut outs video images of upper and lower parts corresponding to the high-resolution image capturing ranges 30b and supplies them to an upper-lower parts video image transmission unit 191. Both a video image of the upper part and a video image of the lower part may be supplied to the upper-lower parts video image transmission unit 191, or a video signal of only one of the upper part and the lower part may be supplied to the upper-lower parts video image transmission unit 191.

In addition, video images supplied to the upper-lower parts video image transmission unit 191 are also displayed in a display unit such as a liquid crystal display provided in the instrument panel, for example. That is, at least one of images in the vertical direction of the movable apparatus is cut out and displayed in the display unit.

Distortion correction may be partially performed with respect to upper, lower, left, and right video images by disposing the distortion correction unit 63 between the cutout unit 101c and the left-right parts video image transmission unit 190 or between the cutout unit 101c and the upper-lower parts video image transmission unit 191.

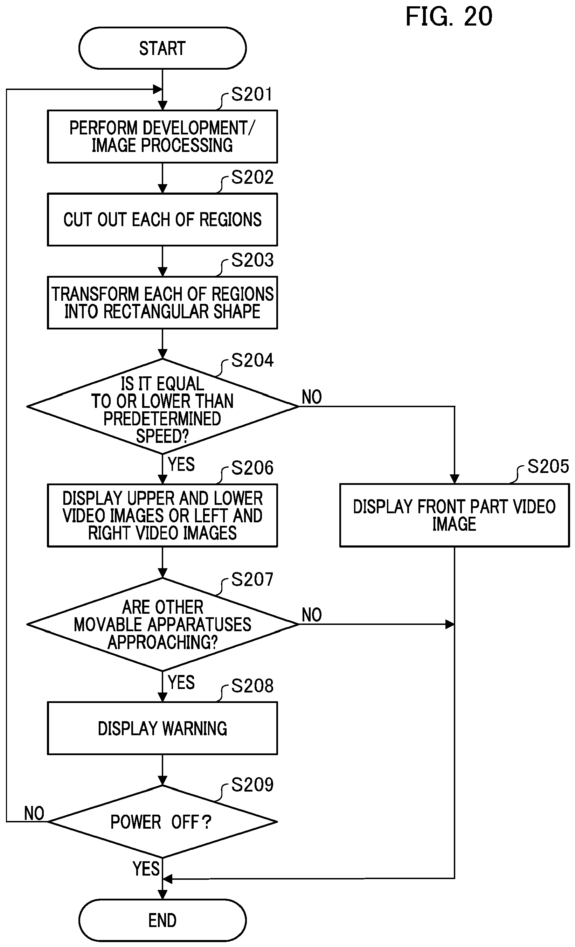

Fig. 20 is an explanatory view for a processing flow in the image capturing method performed by the image capturing device according to Fifth Embodiment. Operation of each step in the flowchart of Fig. 20 is performed by causing the CPU or the like serving as a computer inside the processing unit 13 to execute the computer program stored in the memory.

In Step S201, the processing unit 13 performs image processing such as development processing or various kinds of correction with respect to a video signal received from the image capturing element 12. Next, in Step S202, the cutout unit 101c performs cutting-out of a plurality of regions as described above. Moreover, in Step S203, each of the regions cut out by the cutout unit 101c is transformed into a rectangular shape in accordance with the display screen of the display unit. At that time, as necessary, distortion correction is performed with respect to a video image of each of the regions.

In Step S204, it is judged whether the traveling speed of the vehicle 100 is equal to or lower than a predetermined speed. Here, for example, the predetermined speed is approximately 5 km/hr. In the case of No in Step S204, the processing proceeds to Step S205, and a video image of the front part is displayed in the display unit provided around the instrument panel, for example.

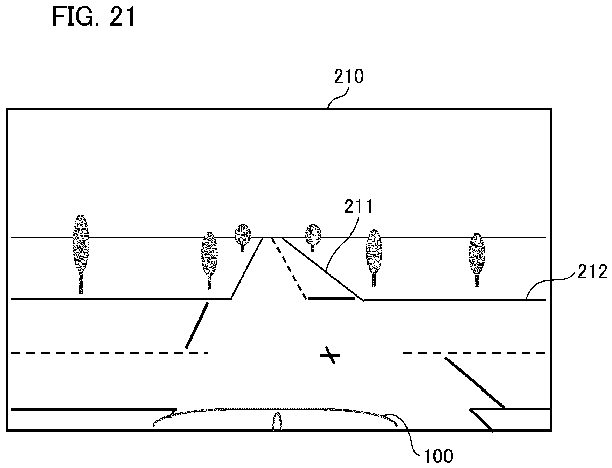

Fig. 21 is a view showing an example of a video image of the side in front according to Fifth Embodiment. In Fig. 21, a portion of the vehicle 100 is projected, but the vehicle 100 may be disposed at a position which is not projected. In Fig. 21, the reference sign 211 is a road in front, and the reference sign 212 is a road intersecting the road 211.

In Step S205, instead of displaying, for example, it may be used in image recognition for detection of an obstacle, or the like. After the processing of Step S205, the processing proceeds to Step S209. In the case of Yes in Step S204, that is, in the case of a low speed, the processing proceeds to Step S206, and upper and lower video images or left and right video images are displayed in the display unit provided around the instrument panel, for example.

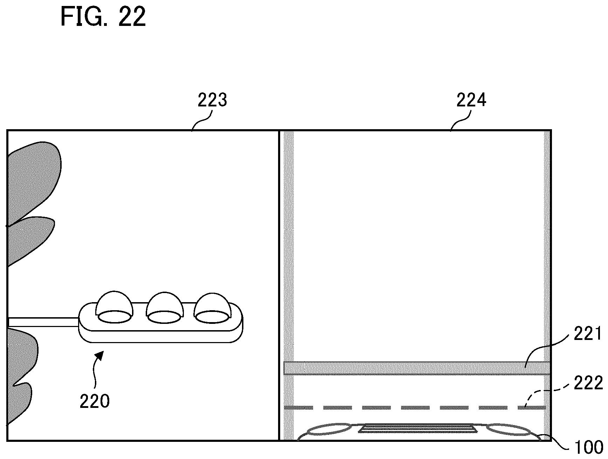

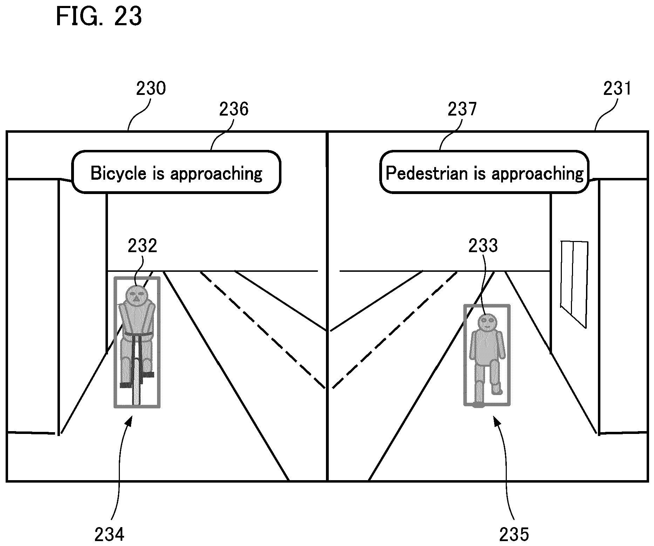

Fig. 22 is a view showing an example of a video image in the vertical direction displayed in Step S206 at the time of a low speed, and Fig. 23 is a view showing an example of a video image in the lateral direction displayed in Step S206 at the time of a low speed. In Fig. 22, the reference sign 223 denotes a video image in an upward direction of the vehicle 100 and a traffic light 220 is projected.

The reference sign 224 is a view showing an example of a video image in a downward direction displayed in Step S206. The reference sign 221 is a stop line, and the reference sign 222 is a line indicating a desirable virtual stop position of the vehicle 100 with respect to the stop line 221. In this manner, the vehicle 100 is likely to stop at an appropriate stop position by displaying a signal or a stop line at the time of a low speed. In Fig. 22, an example in which video images in the upward direction and the downward direction are simultaneously displayed in the vehicle 100 at the time of a low speed has been described, but a video image in only the upward direction or the downward direction may be displayed.

As described above, Fig. 23 is a view showing an example of a video image in the lateral direction displayed in Step S206 at the time of a low speed. In Fig. 23, the reference sign 230 denotes a video image in the left direction, and the reference sign 231 denotes a video image in the right direction. In this manner, if the traveling speed of the vehicle 100 is a low speed, left and right video images are displayed. Therefore, for example, it is possible to avoid an accident such as colliding with a movable apparatus such as a bicycle or a person at an intersection while traveling on a narrow road. For example, the reference sign 232 denotes a person riding a bicycle, and the reference sign 233 denotes a pedestrian. The reference signs 234 and 235 denote image recognition frames.

In the case of Yes in Step S204, moreover, it is judged whether or not a stop line or a crosswalk has been detected on the basis of an image in the downward direction. If a stop line or a crosswalk has been detected, an image in the downward direction of the movable apparatus may be displayed. In that case, since there is a high probability that a traffic light is projected in an image in the upward direction, an image in the upward direction may be simultaneously displayed at this time.

In addition, in the case of Yes in Step S204, moreover, if it is judged that the vehicle has arrived at an intersection or if it is detected that there is an approaching movable apparatus on the left or the right on the basis of an image in the lateral direction, an image in the lateral direction of the movable apparatus may be displayed.

In Step S207 of Fig. 20, it is judged through image recognition whether other movable apparatuses are approaching. For example, in Fig. 23, the reference sign 234 denotes a frame which is displayed in response to image recognition of a person riding a bicycle, and the reference sign 235 denotes a frame which is displayed in response to image recognition of a pedestrian.

In the case of No in Step S207, the processing proceeds to Step S209. Meanwhile, in the case of Yes in Step S207, the processing proceeds to Step S208, and a warning is displayed. In Fig. 23, the reference sign 236 is an example of warning display which is displayed if a bicycle is approaching as a result of image recognition. For example, "bicycle is approaching" is displayed.

In addition, the reference sign 237 is an example of warning display which is displayed if a pedestrian is approaching as a result of image recognition. For example, "pedestrian is approaching" is displayed. In this manner, in Fifth Embodiment, if there is an approaching movable apparatus, not only left and right video images are displayed but also a warning is displayed, which is highly effective in preventing accidents.

After a warning is displayed in Step S208, the processing proceeds to Step S209, and judgment for ending is made. For example, if a user turns off a power source of the vehicle 100, it is judged that the processing has ended, and the flow in Fig. 20 ends. If the judgment in Step S209 is No, the processing returns to Step S201, and a series of the foregoing processing is repeated.

In this manner, according to Fifth Embodiment, obstacles in blind spots on the left and the right and in the downward direction can be recognized with a high resolution in a low-speed state during driving of a movable apparatus such as a vehicle. Therefore, for example, it is possible to reduce accidents caused by sudden appearance of a child, sudden appearance of a bicycle, or the like on a narrow road.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the image capturing device through a network or various storage media. Then, a computer (or a CPU, an MPU, or the like) of the image capturing device may be configured to read and execute the program. In such a case, the program and the storage medium storing the program configure the present invention.

In addition, the present invention includes those realized using at least one processor or circuit configured to function of the embodiments explained above, for example. Dispersion processing may be performed using a plurality of processors.

This application claims the benefit of Japanese Patent Application No. 2022-211269, filed on December 28, 2022, which is hereby incorporated by reference herein in its entirety.

In order to allow image capturing of the side in front of a movable apparatus in a lateral direction, an image capturing device has an image capturing unit including an optical system forming a low-resolution region on a central side on a light reception surface of the image capturing unit and forming a high-resolution region on a peripheral side on the light reception surface of the image capturing unit, wherein the image capturing unit is disposed on the front side of the movable apparatus such that an image of at least the side in front of the movable apparatus in the lateral direction is formed on the light reception surface of the image capturing unit by the optical system.

**Claims**

1. An image capturing device comprising:

    an image capturing unit including an optical system forming a low-resolution region on a central side on a light reception surface of the image capturing unit and forming a high-resolution region on a peripheral side on the light reception surface of the image capturing unit,
    wherein the image capturing unit is disposed on a front side of a movable apparatus such that an image of at least the side in front of the movable apparatus in a lateral direction is formed on the light reception surface of the image capturing unit by the optical system.

2. The image capturing device according to claim 1,
    wherein the image capturing unit is disposed on the front side of the movable apparatus such that an image of at least the side in front of the movable apparatus in the lateral direction is formed in the high-resolution region on the light reception surface of the image capturing unit by the optical system.

3. The image capturing device according to claim 1,
    wherein the high-resolution region includes blind spots of a driver on the side in front of the movable apparatus in the lateral direction.

4. The image capturing device according to claim 1,
    wherein when a focal distance of the optical system is f, a half-viewing angle is $\theta$, an image height in an image plane is y, a projective characteristic indicating a relationship between the image height y and the half-viewing angle $\theta$ is $y(\theta)$, and $\theta max$ is a maximum half-viewing angle of the optical system, $0.2 < 2 \times f \times \tan(\theta max/2)/y(\theta max) < 0.92$ is satisfied.

5. A movable apparatus comprising:

    image capturing units each including an optical system forming a low-resolution region on a central side on a light reception surface of each of the image capturing units and forming a high-resolution region on a peripheral side on the light reception surface of each of the image capturing units,
    wherein each of the image capturing units is configured to form an image of at least the side in front of the movable apparatus in a lateral direction on the light reception surface of each of the image capturing units by each of the optical system, and wherein each of the image capturing units is respectively disposed on different sides in a traverse width direction on the front side of the movable apparatus.

6. The movable apparatus according to claim 5,
    wherein at least portions of image capturing ranges of the high-resolution regions of the image capturing devices, which are respectively disposed on different sides on the front side of the movable apparatus in the traverse width direction, are overlapping each other.

7. The movable apparatus according to claim 5 further comprising at least one processor or circuit configured to function as:
    a composition unit configured to compose video images obtained by the image capturing devices which are respectively disposed on different sides on the front side of the movable apparatus in the traverse width direction.

8. The movable apparatus according to claim 5,
    wherein the at least one processor or circuit is further configured to function as:
    a correction unit configured to correct a stain or a defect in one video image of video images obtained by the image capturing devices which are respectively disposed on different sides on the front side of the movable apparatus in the traverse width direction using the other video image.

9. A movable apparatus equipped with the image capturing device according to claim 1, wherein the image capturing device is disposed in the middle on the front side of the movable apparatus in a traverse width direction.

10. The movable apparatus according to claim 9, further comprising,
    a display unit configured to cut out and display the image of at least the side in front of the movable apparatus in a lateral direction.

**11.** The movable apparatus according to claim 10 further comprising at least one processor or circuit configured to function as:
a distortion correction unit configured to correct a distortion in an image obtained from at least the low-resolution region.

**12.** A non-transitory computer-readable storage medium configured to store a computer program for controlling the following units of a movable apparatus,

wherein the movable apparatus has an image capturing unit including an optical system forming a low-resolution region on a central side on a light reception surface of the image capturing unit and forming a high-resolution region on a peripheral side on the light reception surface of the image capturing unit, and
wherein the image capturing units is disposed on a front side of a movable apparatus such that an image of at least the side in front of the movable apparatus in a lateral direction is formed on the light reception surface of the image capturing unit by the optical system.

# FIG. 1

```
                              ┌─ 10
  ┌ - - - - - - - - - - - - - - - - - - - - - - ┐
  │            ┌─ 12              ┌─ 13         │
  │   ┌──────────────┐    ┌──────────────┐      │
  │   │    IMAGE     │    │              │      │
  │   │  CAPTURING   │──▶ │  PROCESSING  │      │
  │   │   ELEMENT    │    │     UNIT     │      │
  │   └──────────────┘    │              │      │
  │          ▲            │              │      │
  │          │  ┌─ 11     │              │      │
  │   ┌──────────────┐    │              │      │
  │   │   OPTICAL    │    │              │      │
  │   │   SYSTEM     │    │              │      │
  │   └──────────────┘    └──────────────┘      │
  └ - - - - - - - - - - - - - - - - - - - - - - ┘
```

IMAGE FORMATION
HEIGHT
[mm]

20c

20b

HALF-VIEWING
ANGLE
[deg]

$\theta$ a

$\theta$ max

20a

FIG. 2B

FIG. 2A

FIG. 3

## FIG. 4A

## FIG. 4B

FIG. 5

FIG. 6

```
                                              ┌─13
                    ┌─────────────────────────────────────────────────────────────┐
                    │                                                              │
  ┌─12             │  ┌─61              ┌─62              ┌─64                     │
┌──────────────┐   │ ┌─────────────┐  ┌───────────┐  ┌──────────────────┐        │
│IMAGE CAPTURING│──┼▶│DEVELOPMENT/ │─▶│ CUTOUT    │─▶│ELECTRONIC SIDE   │        │
│   ELEMENT     │   │ │   IMAGE     │  │   UNIT    │  │MIRROR VIDEO IMAGE│        │
└──────────────┘   │ │PROCESSING UNIT│ └───────────┘  │TRANSMISSION UNIT │        │
                    │ └─────────────┘        │        └──────────────────┘        │
                    │                        │                                     │
                    │                   ┌─63 ▼           ┌─65                      │
                    │              ┌───────────┐  ┌──────────────────┐            │
                    │              │DISTORTION │─▶│TIRE SURROUNDING  │            │
                    │              │CORRECTION │  │PART VIDEO IMAGE  │            │
                    │              │   UNIT    │  │TRANSMISSION UNIT │            │
                    │              └───────────┘  └──────────────────┘            │
                    │                                                              │
                    └─────────────────────────────────────────────────────────────┘
```

# FIG. 7

```
          ┌──────────────────────┐
          │        START         │
          └──────────────────────┘
                     │
                     ▼
    ┌────────────────────────────────┐
    │    PERFORM DEVELOPMENT/         │ ～S10
    │    IMAGE PROCESSING            │
    └────────────────────────────────┘
                     │
                     ▼
    ┌────────────────────────────────┐
    │  CUT OUT REGION 50a AND REGION 50b │ ～S11
    └────────────────────────────────┘
                     │
                     ▼
    ┌────────────────────────────────┐
    │  TRANSMIT VIDEO IMAGE OF REGION 50a TO │ ～S12
    │  ELECTRONIC SIDE MIRROR        │
    └────────────────────────────────┘
                     │
                     ▼
    ┌────────────────────────────────┐
    │  PERFORM DISTORTION CORRECTION │ ～S13
    │  PROCESSING OF REGION 50b      │
    └────────────────────────────────┘
                     │
                     ▼
    ┌────────────────────────────────┐
    │  TRANSMIT VIDEO IMAGE OF REGION 50a TO │ ～S14
    │  DISPLAY DEVICE FOR PARTS AROUND TIRES │
    └────────────────────────────────┘
                     │
                     ▼
          ┌──────────────────────┐
          │        END           │
          └──────────────────────┘
```

FIG. 8

EP 4 395 356 A1

FIG. 9

# FIG. 10

IMAGE CAPTURING ELEMENT 12

DEVELOPMENT/ IMAGE PROCESSING UNIT 61

CUTOUT UNIT 101a

DISTORTION CORRECTION UNIT 63 → FRONT PART VIDEO IMAGE TRANSMISSION UNIT 102a → FRONT PART VIDEO IMAGE INTEGRATION UNIT 103a

ELECTRONIC SIDE MIRROR VIDEO IMAGE TRANSMISSION UNIT 64

DISTORTION CORRECTION UNIT 63 → TIRE SURROUNDING PART VIDEO IMAGE TRANSMISSION UNIT 65

13

## FIG. 11

```
                    ┌──────────────┐
                    │    START     │
                    └──────┬───────┘
                           │
                           ▼
          ┌────────────────────────────────┐
          │   PERFORM DEVELOPMENT/          │── S10
          │   IMAGE PROCESSING             │
          └────────────────┬───────────────┘
                           │
                           ▼
          ┌────────────────────────────────┐
          │   CUT OUT REGION 50a, REGION   │── S21
          │   50b, AND REGION 90a          │
          └────────────────┬───────────────┘
                           │
                           ▼
          ┌────────────────────────────────┐
          │  TRANSMIT VIDEO IMAGE OF       │── S12
          │  REGION 50a TO ELECTRONIC      │
          │  SIDE MIRROR                   │
          └────────────────┬───────────────┘
                           │
                           ▼
          ┌────────────────────────────────┐
          │  PERFORM DISTORTION CORRECTION │── S13
          │  PROCESSING OF REGION 50b      │
          └────────────────┬───────────────┘
                           │
                           ▼
          ┌────────────────────────────────┐
          │  TRANSMIT VIDEO IMAGE OF       │── S14
          │  REGION 50b TO DISPLAY DEVICE  │
          │  FOR PARTS AROUND TIRES        │
          └────────────────┬───────────────┘
                           │
                           ▼
          ┌────────────────────────────────┐
          │  PERFORM DISTORTION CORRECTION │── S22
          │  PROCESSING OF REGION 90a      │
          └────────────────┬───────────────┘
                           │
                           ▼
          ┌────────────────────────────────┐
          │  TRANSMIT VIDEO IMAGE OF       │── S23
          │  REGION 90a TO FRONT PART      │
          │  VIDEO IMAGE INTEGRATION UNIT  │
          └────────────────┬───────────────┘
                           │
                           ▼
                    ┌──────────────┐
                    │     END      │
                    └──────────────┘
```

FIG. 12

FIG. 13

# FIG. 14

EP 4 395 356 A1

FIG. 15

```
        ┌─────────────────┐
        │      START      │
        └─────────────────┘
                 │
                 ▼
   ┌──────────────────────────┐
   │  PERFORM DEVELOPMENT/     │──── S10
   │  IMAGE PROCESSING         │
   └──────────────────────────┘
                 │
                 ▼
   ┌──────────────────────────┐
   │  CUT OUT REGION 50b AND   │──── S31
   │  REGION 90b               │
   └──────────────────────────┘
                 │
                 ▼
   ┌──────────────────────────┐
   │  PERFORM DISTORTION       │──── S13
   │  CORRECTION PROCESSING    │
   │  OF REGION 50b            │
   └──────────────────────────┘
                 │
                 ▼
   ┌──────────────────────────┐
   │  TRANSMIT VIDEO IMAGE OF  │──── S14
   │  REGION 50b TO DISPLAY    │
   │  DEVICE FOR PARTS AROUND  │
   │  TIRES                    │
   └──────────────────────────┘
                 │
                 ▼
   ┌──────────────────────────┐
   │  PERFORM DISTORTION       │──── S32
   │  CORRECTION PROCESSING    │
   │  OF REGION 90b            │
   └──────────────────────────┘
                 │
                 ▼
   ┌──────────────────────────┐
   │  TRANSMIT VIDEO IMAGE OF  │──── S33
   │  REGION 90b TO REAR PART  │
   │  VIDEO IMAGE INTEGRATION  │
   │  UNIT                     │
   └──────────────────────────┘
                 │
                 ▼
        ┌─────────────────┐
        │       END       │
        └─────────────────┘
```

# FIG. 16

FROM S23

S160

PERFORM POSITIONING

S161

IS THERE STAIN
OR DEFECT IN ONE OF
VIDEO IMAGES?

YES

NO

S163

PERFORM ADDITIVE
COMPOSITION

S162

REPLACE STAIN OR DEFECT
WITH THE OTHER VIDEO IMAGE

END

FIG. 17

EP 4 395 356 A1

FIG. 18

FIG.19

IMAGE CAPTURING ELEMENT — 12

DEVELOPMENT/ IMAGE PROCESSING UNIT — 61

CUTOUT UNIT — 101c

DISTORTION CORRECTION UNIT — 63

FRONT PART VIDEO IMAGE TRANSMISSION UNIT — 102a

LEFT-RIGHT PARTS VIDEO IMAGE TRANSMISSION UNIT — 190

UPPER-LOWER PARTS VIDEO IMAGE TRANSMISSION UNIT — 191

13

EP 4 395 356 A1

FIG. 20

```
                    START

                         ↓ S201
        PERFORM DEVELOPMENT/
        IMAGE PROCESSING

                         ↓ S202
        CUT OUT EACH OF REGIONS

                         ↓ S203
        TRANSFORM EACH OF REGIONS
        INTO RECTANGULAR SHAPE

                         ↓ S204
        IS IT EQUAL                      NO
        TO OR LOWER THAN      ──────────────────→
        PREDETERMINED
        SPEED?                                      S205
           │ YES    S206              DISPLAY FRONT PART VIDEO
        DISPLAY UPPER AND LOWER        IMAGE
        VIDEO IMAGES OR LEFT AND
        RIGHT VIDEO IMAGES

                         ↓ S207
        ARE OTHER                        NO
        MOVABLE APPARATUSES   ──────────────────→
        APPROACHING?
           │ YES    S208
        DISPLAY WARNING

                         ↓ S209
   NO
  ←────    POWER  OFF?
           │ YES

                    END
```

FIG. 21

FIG. 22

FIG. 23

Europäisches
Patentamt

European
Patent Office

Office européen
des brevets

# EUROPEAN SEARCH REPORT

Application Number

EP 23 21 6672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 344 953 A1 (CANON KK [JP]) 3 April 2024 (2024-04-03) * paragraphs [0004], [0011] - [0019], [0045], [0058], [0060], [0080] - [0084], [0095] - [0106]; figures 1-3,6-8 * | 1-8,12 | INV. H04N23/698 B60R1/12 B60R1/24 B60R1/25 |
| X | US 2005/083427 A1 (IMOTO MASAYOSHI [JP]) 21 April 2005 (2005-04-21) | 1-5,8-12 | |
| Y | * paragraphs [0179], [0183], [0184], [0074], [0100], [0101], [0118], [0119], [0174], [0105]; figures 13,14,33-35 * | 6,7 | |
| Y | US 2014/347469 A1 (ZHANG WENDE [US] ET AL) 27 November 2014 (2014-11-27) * paragraphs [0074], [0100], [0101]; figures 1,2 * | 6,7 | |

TECHNICAL FIELDS
SEARCHED (IPC)

H04N
B60R

The present search report has been drawn up for all claims

| Place of search | Date of completion of the search | Examiner |
|---|---|---|
| The Hague | 22 April 2024 | Maetz, Arnaud |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 21 6672

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2024

| Patent document cited in search report | | Publication date | Patent family member(s) | | Publication date |
|---|---|---|---|---|---|
| EP 4344953 | A1 | 03-04-2024 | CN | 117774833 A | 29-03-2024 |
| | | | EP | 4344953 A1 | 03-04-2024 |
| | | | JP | 2024050331 A | 10-04-2024 |
| | | | US | 2024114253 A1 | 04-04-2024 |
| US 2005083427 | A1 | 21-04-2005 | CN | 1607452 A | 20-04-2005 |
| | | | DE | 102004043236 A1 | 12-05-2005 |
| | | | JP | 4766841 B2 | 07-09-2011 |
| | | | JP | 2005110207 A | 21-04-2005 |
| | | | US | 2005083427 A1 | 21-04-2005 |
| US 2014347469 | A1 | 27-11-2014 | CN | 104185010 A | 03-12-2014 |
| | | | DE | 102014107156 A1 | 27-11-2014 |
| | | | US | 2014347469 A1 | 27-11-2014 |

EPO FORM P0459

For more details about this annex : see Official Journal of the European Patent Office, No. 12/82

**REFERENCES CITED IN THE DESCRIPTION**

**Patent documents cited in the description**

- JP 2016168877 A

- JP 2022211269 A